# EUROPEAN PATENT SPECIFICATION

(11) **EP 1 393 324 B1**
(45) Date of publication and mention of the grant of the patent: **03.01.2007**
(21) Application number: 02727748.2
(22) Date of filing: 06.06.2002
(51) Int. Cl.: G21C 19/48

(54) **ACTINIDE PRODUCTION**
AKTINIDHERSTELLUNG
PRODUCTION D'ACTINIDE

(30) Priority: 06.06.2001 GB 0113749
(43) Date of publication of application: 03.03.2004
(73) Proprietor: British Nuclear Fuels PLC, Warrington, Cheshire WA3 6AS (GB)
(72) Inventor: LEWIN, Robert, G., c/o British Nuclear Fuels Plc, Seascale, Cumbria CA20 1PG (GB); THIED, Robert, C., c/o British Nuclear Fuels Plc, Seascale, Cumbria CA20 1PG (GB)
(74) Representative: Harrison Goddard Foote
(86) International application number: PCT/GB2002/002402
(87) International publication number: WO 2002/099815

(56) References cited:
- WO-A-01/41152
- US-A- 4 880 506
- US-A- 5 650 053
- US-H- H 857

## Description

### Field of the Invention

This invention relates to methods for the production of metals from oxides present in spent nuclear fuels and is particularly applicable to the production of actinides, specifically uranium and metals more noble than uranium, from actinide oxides which are present in irradiated nuclear fuels. Methods of the present invention can be used in the treatment of irradiated fuels for producing actinides in metallic form suitable for use as feeds in subsequent electrorefining processes.

### Background to the Invention

In the established art, two processes have been developed for the treatment of irradiated nuclear fuel making use of molten salts. As used herein, the term "molten salts" is intended to cover salts such as lithium chloride which melts at an elevated temperature and also ionic liquids which typically are liquid at room temperature or which melt at a temperature up to about 100°C.

The Dimitrovgrad SSC-RIAR process makes use of chemical oxidants (chlorine and oxygen gases) to react with powdered uranium dioxide fuel to form higher oxidation state compounds such as UO₂Cl₂ which are soluble in the molten salt. In an electrochemical cell the uranium compounds are reduced to UO₂ at the cathode, forming a dendritic deposit. This process has both technical and environmental limitations.

The second process, developed by the Argonne National Laboratory (ANL) is fundamentally an electrorefming technology which uses current flow to anodically oxidise uranium to form uranium ions in the molten salt electrolyte. At the cathode the uranium is reduced and electrodeposited as uranium metal.

The ANL process requires a metal feed. If oxide fuels are to be treated, it is necessary to reduce the uranium oxide (usually UO₂ pellets) to the metal. This reduction process is carried out chemically, using lithium metal in a LiCl or LiCl/KCl molten salt at 500 to 600°C. Alternatively, a salt transport process can be used involving a Cu-Mg-Ca alloy and molten CaCl₂ salt. However, in both reduction methods the by-products, Li₂O and CaO respectively, need to be recovered from the molten salt phase by an electrolysis step. Effectively this means a two stage process.

A disadvantage of the lithium reduction process for producing a metallic feed from an oxide is the production of Li₂O by-product. This requires recycle to make the process economic, and this is done by an electrolytic recovery of lithium metal. Hence this is a two stage process, comprising a reduction step followed by a lithium recovery stage.

In co-pending patent application no. PCT/GB00/04604 there is disclosed a single step process for reducing to metallic form a metal oxide present in spent nuclear fuel, the process comprising cathodically electrolysing the oxide in the presence of a molten salt electrolyte, the potential of the cathode being controlled so as to favour oxygen ionisation over deposition of the metal from the cations present in the molten salt.

The process thereby involves the use of a single electrochemical process to reduce the metal oxide fuel to a metallic form, with oxygen produced as the only by-product. The potential of the cathode is maintained and controlled so that only oxygen ionisation occurs and not the deposition of the cations (eg Ca ions) in the fused salt. Typically, the oxide comprises an actinide oxide, such as uranium oxide or irradiated uranium oxide.

In the nuclear industry, however, it is often necessary to separate metals from a mixture of metal oxides such as occurs in spent nuclear fuel. Thus mixtures of uranium and plutonium oxides, together with the oxides of other actinide metals, may additionally be contaminated with oxides of other, chemically active, metals such as, for example, those associated with zircalloy cladding. The present invention seeks to provide a method for the treatment of irradiated fuel which allows for the separation of uranium, and metals more noble than uranium, from such mixtures as found in spent nuclear fuel, and to provide these metals in a form suitable for use as the feed in a molten salt electrorefining process, whilst ensuring that other, more electropositive, metals remain in the form of oxides.

### Statements of Invention

Thus, according to the present invention there is provided a process for reducing to metallic form oxides of uranium, or metals more noble than uranium, present in spent nuclear fuel comprising a mixture of metal oxides, the process comprising cathodically electrolysing the oxide in the presence of a molten salt electrolyte, the potential of the cathode being controlled so as to favour oxygen ionisation over deposition of metal from the cations present in the molten salt, and to ensure that reduction of metals other than uranium or metals more noble than uranium does not occur.

The invention provides a single electrochemical process to reduce the metal oxide fuel to a metallic form, with oxygen produced as the only by-product. The potential of the cathode is maintained and controlled so that only oxygen ionisation occurs and not the deposition of the cations (eg Ca ions) in the fused salt, and also to ensure that, whilst reduction of uranium or metals more noble than uranium occurs smoothly, the less noble metals are not reduced and remain in the cathode as oxides. Typically, the mixture of oxides includes an actinide oxide, such as uranium oxide or irradiated uranium oxide, or mixed uranium/plutonium oxides. The uranium oxide is commonly uranium dioxide.

The oxide may be in any physical form, and this is generally dependent on the particular chemical nature of the spent nuclear fuel and the processing to which the material has previously been subjected. For example, the fuel may comprise a powder, an amorphous mass, or a dense solid agglomerate. In any event, the material may be treated according to the method of the present invention by connection to an electrical circuit such that it serves as the cathode during electrolysis. Connection to the circuit may be effected by any of the standard means well known to those skilled in the art.

Preferably the oxide fuel is in contact with the cathode of an electrochemical cell. The cathode could be in the form of a mesh basket. The molten salt electrolyte may be any suitable molten salt or mixture of such salts, for instance chloride salts, preferably CaCl₂ and/or BaCl₂.

The anode may be any suitable inert anode, such as carbon. In a process of the present invention the oxide fuel may be first treated mechanically to remove its zircaloy cladding before it is added to the electrolytic cell. Alternatively, the zircaloy cladding may be treated with the fuel. The fuel may require to be sheared into sections of small length prior to treatment in order to expose the oxide fuel to the molten salt.

### Detailed description of the Invention

In order to carry out an embodiment of the present invention, an electrolytic cell is assembled which has a carbon anode and a mesh basket cathode. Irradiated oxide fuel is placed in the mesh basket. The electrolyte consists of a molten salt or a mixture of such salts comprising, for example, chloride salts such as CaCl₂ or BaCl₂. A voltage is applied between the cathode and the anode. At the cathode the reaction involves the diffusion of oxygen atoms to the surface of the solid, followed by ionisation according to the reaction:

O + 2e⁻ → O²⁻.

The oxide ions which are produced dissolve in the electrolyte and are transferred to the anode where they are re-oxidised to produce oxygen gas. The potential at the cathode is controlled, via a third reference electrode, to ensure that the reaction occurring at the cathode is oxygen ionisation and not deposition of the cations in the fused salt, and that only selected metal oxides - specifically those of uranium and of metals more noble than uranium - are reduced. Electrolysis at elevated temperatures results in an increased rate of oxygen diffusion, thereby also encouraging ionisation rather than metal deposition.

After electrolysis the irradiated fuel is left in the form of a metal/metal oxide solid mixture at the cathode, with uranium and more noble metals having been reduced to the metallic form, whilst the less noble metals remain in the form of their oxides. This metallic/metal oxide product, which contains fission products, can be removed and used directly as the feed for an electrorefining process. The remaining components of the cell may be re-used immediately without the need for any cleaning.

In the electrorefining step, a potential is applied to the metal/metal oxide mixture at the anode such that only uranium metal enters the salt, whilst the less noble metals remain behind as oxides. Insufficient potential is applied to encourage the dissolution of metals more noble than uranium.

Thus, only uranium and metals with similar electronegativities enter the salt and the uranium deposited at the cathode is of a higher purity. Contamination of the cathode product with fission product impurities is also substantially reduced.

In an alternative embodiment in accordance with the present invention the electrolytic ionisation of oxygen and the electrorefining processes are carried out in the same cell and the same salt system.

It is to be emphasised that the advantage of the process of the present invention is that it is effectively a single stage process. It is used for the treatment of irradiated mixed metal oxide nuclear fuel, possibly in the form of pellets and, most particularly, is applied to fuels which contain uranium oxide, and mixed uranium and plutonium fuels.

## Claims

1. A process for reducing to metallic form oxides of uranium, or metals more noble than uranium, present in spent nuclear fuel comprising a mixture of metal oxides, the process comprising cathodically electrolysing the metal oxides in the presence of a molten salt electrolyte, the potential of the cathode being controlled so as to favour oxygen ionisation over deposition of the metal from the cations present in the molten salt, and to ensure that reduction of metals, other than uranium or metals more noble than uranium, does not occur.

2. A process according to Claim 1 wherein the metal oxides comprise fuel pellets which include uranium oxide, irradiated uranium oxide or mixed uranium/plutonium oxide.

3. A process according to Claim 2 wherein the uranium oxide comprises uranium dioxide.

4. A process according to any of the preceding claims wherein the oxide is located in a mesh basket which forms the cathode.

5. A process according to any of the preceding claims wherein the molten salt electrolyte comprises at least one chloride salt.

6. A process as claimed in claim 5 wherein the chloride salt is CaCl₂ or BaCl₂.

7. A process according to any of the preceding claims wherein the anode is a carbon anode.

8. A process according to any of the preceding claims wherein the fuel is treated together with its cladding.

9. A process according to any of Claims 1 to 7 wherein the cladding is removed from the fuel prior to treatment.

10. A process according to any of the preceding claims wherein the metal/metal oxide mixture resulting from the process is used as the feed for an electrorefining process.

11. A process according to claim 10 wherein the potential applied during the electrorefining process is such that only uranium metal enters the salt.

12. A process according to Claim 11 wherein the electrorefining process is carried out in the same electrolytic cell as the electrolytic reduction process.

## Patentansprüche

1. Verfahren zum Reduzieren zur metallischen Form von Oxiden von Uran oder Metallen, die edler sind als Uran, welche in verbrauchtem Kernbrennstoff vorliegen, der eine Mischung aus Metalloxiden umfasst, wobei das Verfahren das kathodische Elektrolysieren der Metalloxide in Anwesenheit eines geschmolzenen Salzelektrolyten umfasst, das Potenzial der Kathode derart gesteuert wird, so dass die Sauerstoff-Ionisierung bevorzugt ist gegenüber der Abscheidung von Metall aus den Kationen, die in dem geschmolzenen Salz vorliegen, und um sicherzustellen, dass die Reduktion anderer Metalle als Uran oder anderer als jene Metalle, die edler sind als Uran, nicht eintritt.

2. Verfahren gemäß Anspruch 1, worin die Metalloxide Berennstofftabletten umfassen, welche Uranoxid, bestrahltes Uranoxid oder gemischtes Uran/Plutoniumoxid einschließen.

3. Verfahren gemäß Anspruch 2, worin das Uranoxid Urandioxid umfasst.

4. Verfahren gemäß irgendeinem der vorangehenden Ansprüche, worin sich das Oxid in einem Siebkorb befindet, welcher die Kathode bildet.

5. Verfahren gemäß irgendeinem der vorangehenden Ansprüche, worin der geschmolzene Salzelektrolyt wenigstens ein Chloridsalz umfasst.

6. Verfahren, wie in Anspruch 5 beansprucht, worin das Chloridsalz CaCl₂ oder BaCl₂ ist.

7. Verfahren gemäß irgendeinem der vorangehenden Ansprüche, worin die Anode eine Kohlenstoffanode ist.

8. Verfahren gemäß irgendeinem der vorangehenden Ansprüche, worin der Brennstoff gemeinsam mit seiner Hülle behandelt wird.

9. Verfahren gemäß irgendeinem der Ansprüche 1 bis 7, worin die Hülle von dem Brennstoff vor der Behandlung entfernt wird.

10. Verfahren gemäß irgendeinem der vorangehenden Ansprüche, worin die aus dem Verfahren resultierende Metall/Metalloxid-Mischung als Beschickung für ein elektrolytisches Raffinationsverfahren verwendet wird.

11. Verfahren gemäß Anspruch 10, worin das während des elektrolytischen Raffinationsverfahrens angelegte Potenzial derart ist, dass nur Uranmetall in das Salz eintritt.

12. Verfahren gemäß Anspruch 11, worin das elektrolytische Raffinationsverfahren in der gleichen Zelle ausgeführt wird wie das elektrolytische Reduktionsverfahren.

## Revendications

1. Procédé pour réduire des oxydes d'uranium, sous forme métallique, ou des métaux plus nobles que l'uranium, présents dans du combustible nucléaire usagé, comprenant un mélange d'oxydes de métaux, le procédé comprenant l'étape d'électrolyse de manière cathodique des oxydes de métal en présence d'un électrolyte de sel fondu, le potentiel de la cathode étant contrôlé afin de favoriser l'ionisation de l'oxygène par rapport au dépôt de métal à partir des cations présents dans le sel fondu et s'assurer que la réduction des métaux, autres que l'uranium ou les métaux plus nobles que l'uranium, n'apparaît pas.

2. Procédé selon la revendication 1, **caractérisé en ce que** les oxydes de métaux comportent des pastilles de combustible qui incluent de l'oxyde d'uranium, des oxydes d'uranium irradiés ou des mélanges d'oxyde ou des mélanges d'oxyde uranium/plutonium.

3. Procédé selon la revendication 2, **caractérisé en ce que** l'oxyde d'uranium comporte du dioxyde d'uranium.

4. Procédé selon l'une des revendications précédentes, **caractérisé en ce que** l'oxyde est disposé dans un récipient à mailles qui forme la cathode.

5. Procédé selon l'une des revendications précédentes, **caractérisé en ce que** les électrolytes de sel fondu comportent au moins un sel chlorure.

6. Procédé selon la revendication 5, **caractérisé en que** le sel de chlorure est CaCl₂ ou BaCl₂

7. Procédé selon l'une des revendications précédentes, **caractérisé en ce que** l'anode est une anode carbone.

8. Procédé selon l'une des revendications précédentes, **caractérisé en ce que** le combustible est traité ensemble avec sans placage

9. Procédé selon l'une des revendications 1 à 7, **caractérisé en ce que** le placage est enlevé du combustible avant le traitement.

10. Procédé selon l'une des revendications précédentes, **caractérisé en ce que** le mélange métal/oxyde de métal résultant du procédé est utilisé pour alimenter un processus d'eléctroraffinage.

11. Procédé selon la revendication 10, **caractérisé en ce que** le potentiel appliqué durant le processus d'eléctroraffinage est tel que seulement du métal d'uranium entre dans le sel.

12. Procédé selon la revendication 11, **caractérisé en ce que** le processus d'eléctroraffinage est réalisé dans la même cellule électrolytique que le processus de réduction électrolytique.
